# EUROPEAN PATENT SPECIFICATION

(11) **EP 3 670 968 B1**
(45) Date of publication and mention of the grant of the patent: **24.11.2021**
(21) Application number: 18382942.3
(22) Date of filing: 18.12.2018
(51) Int. Cl.: F16H 59/02, F16H 59/10, F16H 61/22

(54) **SHIFT BY WIRE SHIFTING DEVICE**
SHIFT-BY-WIRE-SCHALTVORRICHTUNG
DISPOSITIF CHANGEMENT DE VITESSE ELECTRONIQUE

(43) Date of publication of application: 24.06.2020
(73) Proprietor: Fico Triad, S.A., 08028 Barcelona (ES)
(72) Inventor: GIMENO GRANÉ, Santiago, 08232 Viladecavalls (ES); FERRER RIBAS, Oscar, 08232 Viladecavalls (ES)
(74) Representative: ZBM Patents - Zea, Barlocci & Markvardsen

(56) References cited:
- WO-A1-2015/185281
- WO-A1-2017/004126
- WO-A1-2018/029600

## Description

### Field of the invention

The present disclosure relates to shifting devices for electronically controlling motor vehicle automatic transmissions, specifically of the shift-by-wire type where a shift signal from a shift lever operated by a user is translated into a change in a transmission mode. Typical transmission modes in vehicle automatic transmissions are, for example, park mode, no-park mode, reverse mode, neutral mode, drive mode, and so forth.

### Background

Shift-by-wire shifting devices are known where a shift lever can be moved within a least one shift gate. Known shifting devices such as the one disclosed in WO2016037822 may include a first shift gate to operate transmission according to an automatic gearshift mode, for automatically change gear ratios, and a second shift gate to operate transmission according to a manual gearshift mode, for manually changing gear ratios. In the shifting devices disclosed in WO2016037822 the change between automatic and manual gearshift modes can only be completed from a given shift position, namely the drive position. A limiting apparatus is provided to block or allow a movement of the shift lever from a starting shifting position to a target shifting position in dependence on an actuator. Such limiting apparatus comprises a translationally movable actuating element and a rotationally movable stop element. The stop element can be rotationally moved by the actuating element such that the stop element allows the movement of the shift lever from the starting shifting position to the target shifting position.

In the above described types of shifting devices, it may be also desirable to provide a visual indication so that the user can easily recognize a given gearshift mode according to a specific position where the shift lever remains. For example, in GB2417994 a shift lever can be moved in shift gate slots forming retention positions, such as reverse and low gearshift positions, where the shift lever is engaged. The shift lever can also be moved in other shift gate slots forming momentary positions such as neutral and drive gearshift positions, where the shift lever is allowed to automatically return to a home position. By allowing the shift lever to be held in a momentary position without returning to the home position the driver can easily recognize the current gear range as being the reverse range or the low range.

WO2018029600 discloses a motor-vehicle gearbox control device comprising a control lever rotatably supported by a support structure for rotation about a first axis and second axes of rotation such that the control lever can be moved forwardly and backwardly between a first plurality of operative positions by rotation about the second axis of rotation and forwardly and backwardly between a second plurality of operative positions by rotation about the second axis of rotation. The device also includes biasing means exerting a biasing action on the control lever and controllable locking means to keep the control lever in a selection plane comprising respective electromagnets fixed to the support structure and, for each electromagnet, a respective insert of ferromagnetic material that is mounted so as to be drivingly connected with the control lever for rotation about the first axis of rotation and is arranged to be kept in contact with the respective electromagnet when the control lever is in the respective secondary selection plane and the respective electromagnet is energized.

WO2015185281 relates to gear selecting apparatus for a vehicle having shift-by-wire automatic transmission having a selector lever movable in a primary, touch control and switching channels and comprising a latching apparatus. A blocking apparatus is provided having a blocking slide with at least one blocking recess, an actuator, a blocking pin guided and movable by the actuator to engage in the blocking recess, and a spring.

WO2017004126 provides a shift lever assembly comprising a shift lever rotatable about a pivot first and second perpendicular axes. A primary, secondary and interconnecting shift paths in which the shift lever may move. A blocking member has a first position that prevents the shift lever from moving from the primary shift path into the interconnecting path and a second position permitting the shift lever to move from the primary shift path into the interconnecting path. An actuator moves the blocking member to the second position when the shift lever is in a position corresponding to one drive gear.

Devices are also known consisting of an electromagnet for temporarily retaining the shift lever in a manual gearshift mode. The shift lever is released when the electromagnet is not energized. A solenoid is also provided in said known devices for locking the lever in order prevent it from reaching the manual gearshift mode. However, there is still a need for simpler shifting devices of the monostable or bistable types for controlling shift-by-wire automatic transmissions in motor vehicles which are efficient in operation, cost effective, while allowing the vehicle transmission to be operated according to both automatic and manual gearshift modes.

### Summary

With the present shifting device, the disadvantages of the prior art can be at least partially overcome while a number of advantages are obtained. This is achieved by the features of the independent claim. Advantageous embodiments and modifications of the invention will become apparent from the dependent claims.

The present shift by wire shifting device finds particular application in the so-called monostable shifting devices, where once a given gearshift position has been selected, the shift lever tends to automatically return back to a stable or home position. When a specific gearshift position has been selected, a gearshift signal is sent to a control unit to drive the vehicle transmission accordingly and the selector automatically returns to the home position as stated above. Other variants such as bistable shifting devices are of course included.

In one aspect, the present shift by wire shifting device comprises a shift lever operable to move from a home position, also referred to as rest or stable position, into a plurality of different unstable gearshift positions such as reverse (R), neutral (N), drive (D), manual (M), manual up (M+), manual down (M-). Said unstable gearshift positions R, N, D, M+, M- can be operated in at least an automatic gearshift mode, for automatically changing gear ratios, and preferably it can be also operated in a manual gearshift mode, for manually changing gear ratios. However, the present shifting device can be also used for other types of shifting devices than for a manual gearshift mode as long as the shift lever can be retained in a position different from the home position. Within the meaning of the present disclosure, the terms gear ratio and gearshift position are herein used interchangeably.

The present shift by wire shifting device further includes a shift lever locking mechanism. The shift lever locking mechanism comprises a movable locking member that can be positioned at least in a first position and a second position.

In the first position, the shift lever can be moved into a predetermined gearshift position such as into the above mentioned manual gearshift mode, that is, the shift lever can be moved for engaging the locking mechanism.

In the second position, the shift lever is releasably retained in said predetermined gearshift position, said predetermined gearshift position being different from the home position, with the shift lever engaged to the locking mechanism, such that the unstable gearshift position becomes a stable position. The second position provides the user or driver a visual indication that the shift lever is in the predetermined gearshift position. In said second position of the locking member, other gearshift positions than the home position can be manually changed. Preferably in the second position, release from the predetermined gearshift position can be carried by moving the shift lever.

In a further example, the movable locking member can be allowed to be positioned in a third position. In said third position, the shift lever can be released from the locking mechanism allowing the shift lever to move back into the home position.

Yet in other examples, the movable locking member can be allowed to be positioned in a fourth position. In said fourth position, the shift lever is prevented from being moved into the predetermined gearshift position, that is, the shift lever can not be engaged to the locking mechanism and also sending gearshift signals.

In one preferred example, the movable locking member is translationally displaceable against the urging of a biasing member. One preferred example of said biasing member may be a pre-compressed spring arranged for causing the locking member to be in the above mentioned second position where the shift lever is releasably retained. The spring may be pre-compressed in the first position.

In one preferred example, motor means are included at least for driving the locking member into the above mentioned third and fourth positions. Such motor means may comprise a suitable electric motor such as for example a DC motor. Other types of motors can be used as long as they are suitable for causing the locking member to move at least into the third position or into the fourth position described above.

The locking member can be driven by the motor means through a gear transmission suitable to drive the locking member into at least said third or fourth positions. In its most general form, the gear transmission comprises a pusher capable of transforming a rotational movement of the motor means into a translational movement of the locking member against the biasing member into at least the third position or the fourth position. More specifically, in one example, the gear transmission may comprise a worm gear that is part of or is attached to a motor output shaft. The gear transmission may also include a pin axially fixed on an assembly housing, that is, restrained against axial displacement such that it can only be driven in rotation. The pin has a threaded end that is screwed into the pusher. A pin gear is also provided that is part of or is attached to the pin. The pin gear this engages the worm gear. The gear transmission may also include a pusher restrained against rotation and into which the pin is screwed. The locking member can be thus driven relative to the gear transmission such that the pusher acts to push the locking member resulting in a relative movement between the pusher and the locking member.

With the above described gear transmission, as the motor means is driven, the motor output shaft is rotated causing the worm gear to be rotated. This in turn causes the pin to be rotated through the pin gear. As a result, the pusher is axially displaced and the locking member is pushed against the biasing member into at least the above mentioned third or fourth positions.

The above mentioned gear transmission is by no means limited to the above example. Other types of gear transmissions may be provided. For example, a threaded output shaft driven by the motor means and screwed into a pusher restrained against rotation may be provided. Rotation of the motor means causes the pusher to be displaced pushing the locking member against the biasing member into the third position. In a further example of gear transmission, the motor means may include an output shaft having a driving gear engaging a driven gear that is part of or is attached to a threaded driven shaft that is in turn screwed into a pusher restrained against rotation. Rotation of the motor means causes the pusher to be displaced pushing the locking member against the biasing member into the third position. Still in a further example of gear transmission, the motor means may include an output shaft having a driving gear engaging a driven rack that is in turn attached to the locking member. Rotation of the motor means causes the pusher to be displaced such that the locking member is pushed against the biasing member into the third position.

It is to be noted that at least one degree of freedom exists between the pusher and the locking member, for releasing the shift lever from the locking member without the motor means being driven.

According to the invention, the shift lever has an outwardly extending portion configured as a lever arm. The lever arm projects a given distance from the shift lever so as to be releasably retained by the locking member in the predetermined gearshift position, that is, in the second position of the movable locking member where the shift lever is releasably retained in the predetermined gearshift position. Said predetermined gearshift position, such as for example in the manual gearshift mode, can be released by the user by acting on the shift lever.

According to the invention, the locking member comprises a slider blocker. The slider blocker may be configured as a block shaped part arranged to move to and guided with the above mentioned assembly housing. The slider blocker has a front surface facing the lever arm and a recess defined in said front surface for receiving and releasably retaining the lever arm. For this purpose, the recess has an entry ramp that is shaped to facilitate the entry of the lever arm therein, and an exit ramp shaped to retain the lever arm therein. The recess in the slider blocker is configured to allow the lever arm to be moved in other directions than the home direction so as to allow changing into other gearshift positions. The slider blocker may also have a top surface intended to be pushed by the pusher and a bottom surface intended to be urged by the biasing member.

The biasing member is thus arranged to cause the slider blocker with its recess to be positioned such that the lever arm is allowed to engage the slider blocker.

The present shift by wire shifting device is intended to operate in conjunction with at least one contoured surface intended to give the user or driver a gearshift feel as the shift lever is operated. For this purpose, a spring biased plunger is fitted at the shift lever. Said plunger is configured to slide on the contoured surface as the shift lever is operated giving the user a gearshift feel. The contoured surface is designed with curved feeling surfaces and ramps that define shift lever positions such as reverse, neutral and drive in the automatic mode, and manual and manual up and down in the manual mode, as stated above. It may be preferred that the contoured surface is configured with such curved feeling surfaces and ramps so configured that the shift lever automatically returns back to the home position once a given gearshift position has been selected by the user or driver.

One significant advantage of the above described shift by wire shifting device over prior art known shifting devices is that both in the first position and second position only passive elements are involved with no need for a power supply. In addition, retaining, releasing, and blocking of the shift lever according to the above mentioned first, second, third, and fourth positions, is performed by a single device, namely the motor means. As a result, costs are reduced as well as energy consumption, while enhancing safety as being less likely to fail.

### Brief description of the drawings

Non-limiting examples of the present disclosure will be described in the following with reference to the appended drawings, in which:
Figure 1 is a general perspective part view of one example of the present shift by wire shifting device;
Figure 2 is a general perspective view of the example in figure 1 where the assembly housing has been illustrated;
Figure 3 is a top plan view of the contoured surface;
Figure 4 is a sectional view of the present shift by wire shifting device in figure 1;
Figure 5 is an elevational view showing the present shift by wire shifting device with the movable locking member in the first position;
Figure 6 is an elevational view showing the present shift by wire shifting device with the movable locking member in the second position;
Figure 7 is an elevational view showing the present shift by wire shifting device with the movable locking member in the fourth position;
Figure 8 is an elevational view showing the present shift by wire shifting device with the movable locking member in the third position;
Figure 9 is a perspective view showing the present shift by wire shifting device where a first example of a gear transmission has been shown;
Figure 10 is a perspective view showing the present shift by wire shifting device where a second example of a gear transmission has been shown; and
Figure 11 is a perspective view showing the present shift by wire shifting device where a third example of a gear transmission has been shown.

### Detailed description of examples

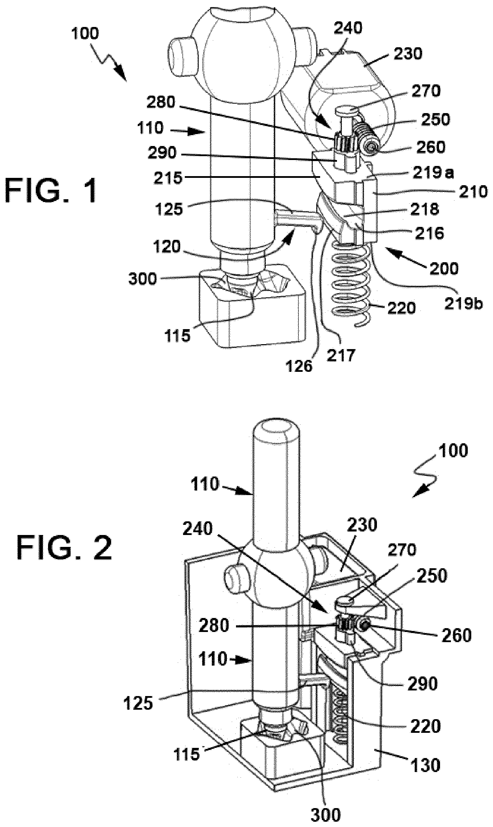

The present shift by wire shifting device will be described by means of non-limiting examples in reference to the following figures 1-11.

In the drawings, the shift by wire shifting device has been denoted as a whole by reference numeral 100. In all the examples, the shift by wire shifting device 100 comprises a shift lever 110 that is pivotally mounted to an assembly housing 130 as shown in figure 2. Those skilled in the art will however appreciate that, in other examples, the shift lever 110 may be translationally mounted to the assembly housing 130 such as for example sliding thereto. The shift lever 110 is operable to move from a home position H, which is a stable position for the shift lever 110, as shown in figures 1 and 2, for example, into a plurality of different unstable gearshift positions. Examples of unstable gearshift positions of the shift lever 110 are reverse R, neutral N, drive D, manual M, manual up M+, or manual down M-.

The shifting device 100 disclosed herein correspond to a monostable shifting device in which once a given gearshift position has been selected, the shift lever 110 tends to automatically return back to the home position H. Also, the non-limiting examples of the shifting device 100 disclosed herein all correspond to a shift-by-wire shifting device 100 in which when a specific gearshift position has been selected, a gearshift signal is sent to a control unit, not shown, to drive the vehicle transmission accordingly.

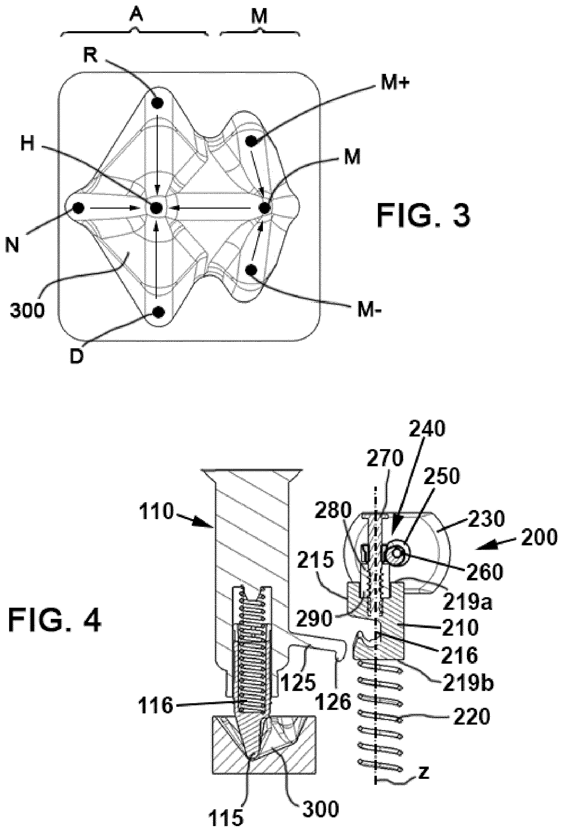

Referring to figure 3 of the drawings, the reverse R, neutral N, and drive D unstable gearshift positions in the present examples are operated in an automatic gearshift mode A, while the manual up M+ and manual down M- unstable gearshift positions are operated in a manual gearshift mode M.

Still referring to figure 3 of the drawings, a set of contoured surfaces 300 is provided. The set of contoured surfaces 300 comprises curved surfaces and ramps configured to define different shift lever positions such as the above mentioned reverse R, neutral N, and drive D positions in the automatic mode A, and manual up M+, and manual down M- in the manual mode M. In conjunction with the set of contoured surfaces 300, a plunger 115 biased by a spring 116 is fitted at one end of the shift lever 110 as shown in figure 4. Such spring biased plunger 115 has a tip arranged to slide on said curved surfaces and ramps of the set of contoured surfaces 300 as the shift lever 110 is operated giving the user a gearshift feel. The contoured surfaces 300 are also configured to cause the shift lever 110 to automatically return back to the home position H after a given gearshift position has been selected.

A shift lever locking mechanism 200 is also provided. The locking mechanism 200 is intended for releasably locking the shift lever 110 in a predetermined gearshift position, such as for example, in the manual gearshift mode M. This provides the user or driver a visual indication that the shift lever 110 is in the manual gearshift mode M.

The shift lever locking mechanism 200 comprises a movable locking member which in the example shown in the figures is a slider blocker 210. The slider blocker 210 is configured as a block shaped element arranged to move along a vertical axis Z within the assembly housing 130, as shown in figure 4 of the drawings.

In the examples shown, the shift lever 110 has an outwardly extending portion 120 configured as a lever arm 125 extending from one side of the shift lever 110. The lever arm 125 projects a given distance from the shift lever 110 and terminates in a hooked end 126 that is suitably sized and shaped to be releasably retained in at least to the home position H by the slider blocker 210 after the shift lever 110 has been moved into the manual gearshift mode M, that is, in the second position of the slider blocker 210. The slider blocker 210 thus retains the return movement of the shift lever 110 along paths on the contoured surface 300 in the directions illustrated in figure 3. In that example, as the predetermined gearshift position is manual gearshift mode M, the slider blocker 210 retains the return movement of the shift lever 110 along the path between manual gearshift mode M position and home position H.

The slider blocker 210 has a front surface 215 facing the lever arm 125. A recess 216 is formed in the front surface 215 of the slider blocker 210. The recess 216 is suitably configured for receiving and releasably retaining the lever arm 125 by the above mentioned hooked end 126. Also, the recess 216 of the slider blocker 210 is suitably configured to allow the lever arm 125 of the shift lever 110 to be moved therein in at least other directions than the home position H allowing, in that example, gear ratios to be manually changed in the manual gearshift mode M. In order for the lever arm 125 of the shift lever 110 to be releasably locked by the slider blocker 210 of the locking mechanism 200 in the manual gearshift mode M, the recess 216 has an entry ramp 217. The entry ramp 217 has a smooth curve with gentle slope so as to facilitate entry of the lever arm 125 into the recess 216 of the slider blocker 210. An exit ramp 218 is also formed in the recess 216 of the slider blocker 210. The exit ramp 218 is shaped with an abrupt slope suitable to retain the hooked end 126 of the lever arm 125 therein preventing the shift lever 110 to move from the manual gearshift mode M back to the home position H away from the slider blocker 210. The slider blocker 210 also has a top surface 219a intended to be contacted with and pushed by a pusher 290, which will be explained in detail below. The slider blocker 210 also has a bottom surface 219b intended to be urged by a spring 220. The spring 220 is pre-compressed so as to urge the slider blocker 210 continuously upwards for causing the lever arm 125 of the shift lever 110 to be retained by the slider blocker 210 engaging the slider blocker 210 when in the manual gearshift mode M. As stated above, the shift lever 110 is releasably retained by the slider blocker 210 in a way that the shift lever 110 is temporarily prevented from returning back to the home position H and thus the plunger 115 of the shift lever 110 is not allowed to slide on the contoured surfaces 300 towards said home position H.

In the example described above, the slider blocker 210 can be positioned in four different positions corresponding to relative positions of the slider blocker recess 216 and the shift lever arm 125.

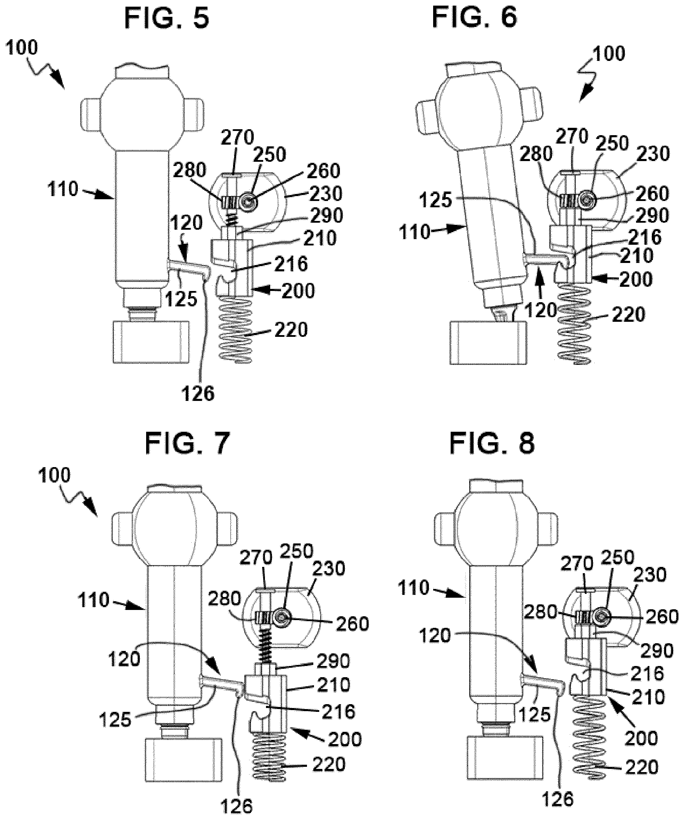

In particular, the slider blocker 210 can be positioned in a first position, shown in figure 5, where the recess 216 is arranged facing the lever arm 125 of the shift lever 110. This allows the lever arm 125 of the shift lever 110 to be received within the recess 216 of the slider blocker 210 as the shift lever 110 is moved towards the slider blocker 210 into the manual gearshift mode M. Once in the manual gearshift mode M, the lever arm 125 is allowed to run inside the recess 216 for manually changing gear ratios. To this effect, the recess 216 suitably extends longitudinally within the slider blocker 210 so as to allow the shift lever 110 to move into different gearshift positions in the manual gearshift mode M such as for example manual up M+ and manual down M- positions. Said gearshift positions correspond to directions different from home position H, that is, directions into gearshift positions other than the home position H.

The slider blocker 210 can be also positioned in a second position shown in figure 6, which is different from the first position shown in figure 5. In this second position, the slider blocker 210 is positioned such that the lever arm 125 of the shift lever 110 is already received within the recess 216 of the slider blocker 210 and retained therein in at least the direction to the home position H.

Continuous upward biasing action of the spring 220 causes the lever arm 125 to abut the exit ramp 218 such that the lever arm 125 is prevented from getting out of the recess 216 of the slider blocker 210 in the manual gearshift mode M. In this second position of the slider blocker 210, the shift lever 110 remains in a position different from the home position H such that the user or driver has a visual indication that the shift lever 110 is in the manual gearshift mode M, where gear ratios can be manually changed with the tip of the plunger 115 sliding on the contoured surfaces 300 as the shift lever 110 is operated giving the user a gearshift feel. It is to be noted that manually changing ratios in the manual gearshift mode M is made possible by the slider blocker 210 while the shift lever 110 is in a position different from the home position H such as in the manual gearshift mode M.

In addition, the slider blocker 210 can be positioned in a third position shown in figure 8, different from the first and the second positions shown in figures 5 and 6. In this third position, the slider blocker 210 is positioned such that the lever arm 125 of the shift lever 110 can be released from the recess 216 of the slider blocker 210 such that the shift lever 110 is allowed to move back into the home position H.

Finally, the slider blocker 210 can be positioned in a fourth position shown in figure 7, different from the first, second, and third positions shown in figures 5-6 and 8. In this fourth position, the slider blocker 210 has been moved even further down, past the recess 216 of the slider blocker 210, such that the lever arm 125 of the shift lever 110 contacts the slider blocker front surface 215. As a result, the lever arm 125 is prevented from being received into the recess 216 of the slider blocker 210 and the manual gearshift mode M can not be reached. This may be advantageous for safety reasons in a number of certain risk situations when it is required the manual gearshift mode M to be locked when the vehicle is stopped. Said risk situations may be for example when vehicle brake pedal is not pressed, when a vehicle door is not closed, of when a seat belt is not fastened. Other situations are of course not ruled out.

The above mentioned positions of the slider blocker 210 as it is moved, in this example vertically in the drawings, are defined by the different relative positions of the slider blocker recess 216 and the lever arm 125 as stated above. Translational movement of the slider blocker 210 occurs against the pre-compressed spring 220.

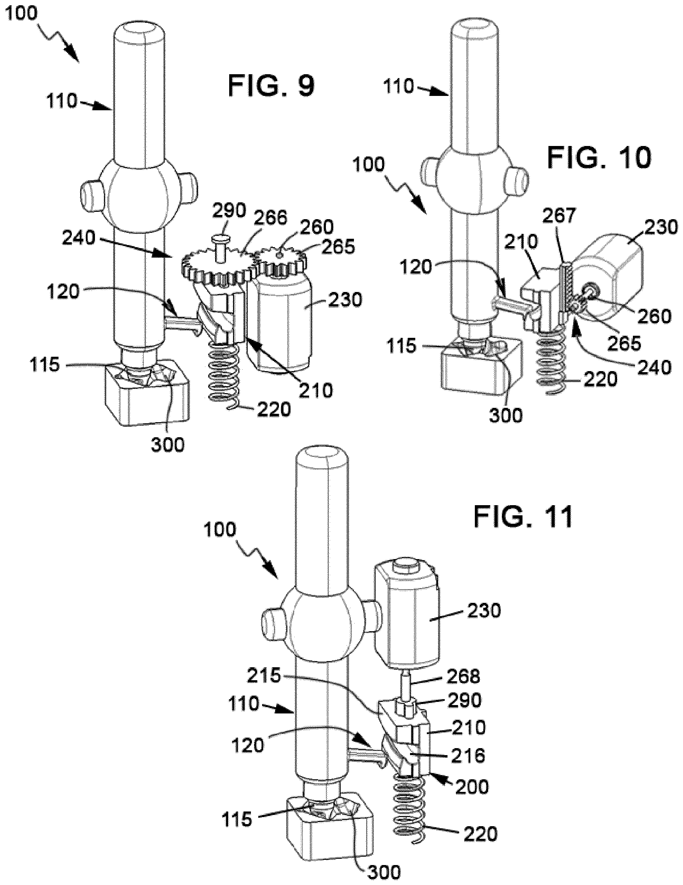

In the examples shown in the drawings, motor means are provided. The motor means in the present examples comprise a DC motor 230 suitable for driving the slider blocker 210 in translation downwards in the drawings against the biasing action of the spring 220 at least into the third position or into the fourth position mentioned above. For this purpose, a suitable gear transmission 240 is provided. Figures 9-11 show three different examples of the gear transmission 240.

In a first example shown in figures 5-8 of the drawings, the gear transmission 240 comprises a worm gear 250 attached to the motor output shaft 260. The gear transmission 240 in this example further comprises a pin 270 that is translationally fixed to the assembly housing 130, that is, the pin 270 is restrained against axial displacement so it can only be driven in rotation. The pin 270 has a threaded end that is screwed into a pusher 290. In this first example, the gear transmission 240 further comprises a pin gear 280 attached to the pin 270 and engaging the worm gear 250.. The pusher 290 in this example comprises a cylindrical member having a projection suitable to be fitted into a correspondingly shaped cavity formed in the top surface 219a of the slider blocker 210. This prevents the pusher 290 from being rotated. The pin 270 is screwed into the pusher 290. As the motor 230 is driven, the output shaft 260 is rotated causing the worm gear 250 to be rotated which in turn causes the pin 270 to be rotated through the pin gear 280. This in turn causes the pusher 290 to be axially displaced. As a result, the slider blocker 210 is pushed down against the spring 220 into at least the third position or the fourth position described above.

In a second example shown in figure 9, the gear transmission 240 comprises a driving gear 265 attached to the motor output shaft 260. The driving gear 265 engages a driven gear 266 that is attached to a threaded driven shaft that is in turn screwed into pusher 290. As stated above, the pusher 290 is restrained against rotation. Thus, rotation of the motor output shaft 260 by the motor 230 causes driving gear 265 to be rotated such that the pusher 290 is displaced downwards pushing the slider blocker 210 down against the spring 220 into at least the third position or the fourth position described above.

In a third example shown in figure 10, the gear transmission 240 comprises a driving gear 265 attached to the motor output shaft 260. The driving gear 265 engages a driven rack 267 which acts as the pusher of the above examples. The slider blocker 210 and the driving gear 265 are linked to one another by direct contact. As the motor 230 is actuated, the driving gear 265 is rotated by the motor output shaft 260 causing the rack 267 to be move downwards pushing the slider blocker 210 against the spring 220 into at least the third position or the fourth position described above.

In a fourth example shown in figure 11, the gear transmission 240 comprises a threaded motor output shaft 268 that is screwed into pusher 290 which, as in the above examples, is restrained against rotation. Rotation of the motor 230 causes the threaded output shaft 268 to rotate causing the pusher 290 to be displaced down. This causes the slider blocker 210 to be pushed against the spring 220 into at least the third position or the fourth position described above.

It is to be noted that, in any of the examples disclosed above, the shift lever 110 can be released back into the home position H either automatically or manually by the user. Automatically releasing the shift lever 110 into the home position H may be carried out for example by the motor means 230 which are automatically operated as the user stops the vehicle, causing the slider blocker 210 to move downwards into the third position. As stated above, in that position of the slider blocker 210, the shift lever 110 can be released from the locking mechanism 200 allowing the shift lever 110 to move into the home position H due to feeling ramps provided in the contoured surface 300. Manually releasing the shift lever 110 into the home position H may be carried out by manually operating the shift lever 110 such that the spring force of the spring 220 is overcome by the slider blocker 210 into the third position.

It is also important to note that, with the above described shift by wire shifting device 100, two functions can be performed, namely, automatic return into the home position H as well as locking of the shift lever 110 in the manual gearshift mode M, with only one mechanism.

Although only a number of examples have been disclosed herein, other alternatives, modifications, uses and/or equivalents thereof are possible. Furthermore, all possible combinations of the described examples according to the appended claims are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. - Shift by wire shifting device (100) for driving a motor vehicle transmission, the shifting device (100) comprising a shift lever (110) operable to move from a home position (H) into a plurality of different unstable gearshift positions (R, N, D, M, M+, M-), in at least an automatic gearshift mode (A), for automatically change gear ratios, such that once a given gearshift position has been selected, the shift lever (110) tends to automatically return back to the home position (H), wherein the shifting device (100) further includes a shift lever locking mechanism (200) comprising a movable locking member (210) that can be positioned at least in:
- a first position where the shift lever (110) can be moved into a predetermined gearshift position; and
- a second position where the shift lever (110) is releasably retained in the predetermined gearshift position, said predetermined gearshift position being different from the home position (H), providing a visual indication that the shift lever (110) is in the predetermined position
wherein the shift lever (110) has an outwardly extending portion (120) configured as a lever arm (125) intended to be releasably retained by the locking member (210) in the predetermined gearshift position, **characterized in that** the locking member comprises a slider blocker (210) having a front surface (215) facing the lever arm (125) and a recess (216) defined therein for receiving and retaining the lever arm (125) and configured to allow the lever arm (125) to be moved therein so as to allow other gear ratios to be changed, the recess (216) having a shift lever portion entry ramp (217) that is shaped to facilitate the entry of the lever arm (125) therein, and a shift lever portion exit ramp (218) shaped to retain the lever arm (125) therein.

2. - A shift by wire shifting device (100) according to claim 1, wherein the movable locking member (210) can be also positioned at least in:
- a third position where the shift lever (110) can be released from the locking mechanism (200) allowing the shift lever (110) to move into the home position (H).

3. - A shift by wire shifting device (100) according to claim 1 or 2, wherein the movable locking member (210) can be also positioned at least in:
- a fourth position where the shift lever (110) is prevented from being moved into the predetermined gearshift position.

4. - A shift by wire shifting device (100) according to any of the claims 1-3, wherein in said second position other gear ratios than home position (H) are allowed to be changed.

5. - Shift by wire shifting device (100) according to any of the claims 1-4, wherein the movable locking member (210) is translationally displaceable against the urging of a biasing member (220).

6. Shift by wire shifting device (100) as claimed in claim 5, wherein the biasing member comprises a pre-compressed spring (220) arranged for causing the locking member (210) to be in the second position.

7. Shift by wire shifting device (100) as claimed in any of the claims 2-6, wherein it further includes motor means (230) for causing the locking member (210) to move at least into the third position or into the fourth position.

8. Shift by wire shifting (100) device as claimed in claim 7, wherein it further includes a gear transmission (240) arranged to drive the locking member (210) through the motor means (230) into at least the third position or into the fourth position, the gear transmission (240) comprising a pusher (290) capable of transforming a rotational movement of the motor means (230) into a translational movement of the locking member (210) against the biasing member (220) into at least the third position or the fourth position.

9. - Shift by wire shifting device (100) as claimed in any of the claims 6-8, wherein the slider blocker (210) has a top surface (219a) intended to be pushed by the pusher (290) and a bottom surface (210b) intended to be urged by the biasing member (220).

10. - Shift by wire shifting device (100) as claimed in any of the claims 1-9, wherein at least one contoured surface (300) is provided on which a spring biased plunger (115) of the shift lever (110) slides as the shift lever (110) is operated so as to give the user a gearshift feel in use.

11. Shift by wire shifting device (100) as claimed in claim 10, wherein said contoured surface (300) is configured so as to cause the shift lever (110) to automatically return back to the home position (H) once a given gearshift position has been selected.

12. Shift by wire shifting device (100) as claimed in any of the claims 1-11, wherein the predetermined gearshift position corresponds to a manual gearshift mode (M).

## Patentansprüche

1. - Shift-by-wire-Schaltvorrichtung (100) zum Antreiben eines Kraftfahrzeuggetriebes, wobei die Schaltvorrichtung (100) einen Schalthebel (110) umfasst, der betreibbar ist, um sich von einer Ausgangsposition (H) in eine Vielzahl von unterschiedlichen instabilen Gangschaltpositionen (R, N, D, M, M+, M-) zu bewegen, zumindest in einem automatischen Schaltmodus (A), zum automatischen Wechsel von Übersetzungsverhältnissen, so dass der Schalthebel (110), nachdem eine gegebene Gangschaltposition ausgewählt worden ist, dazu neigt, automatisch zurück in die Ausgangsposition (H) zu kehren, wobei die Schaltvorrichtung (100) weiterhin einen Schalthebelsperrmechanismus (200) umfasst, der ein bewegliches Sperrelement (210) umfasst, das zumindest positioniert werden kann in:
- eine erste Position, in der der Schalthebel (110) in eine vorbestimmte Gangschaltposition bewogen werden kann; und
- eine zweite Position, in der der Schalthebel (110) lösbar in der vorbestimmten Gangschaltposition gehalten wird, wobei sich die vorbestimmte Gangschaltposition von der Ausgangsposition (H) unterscheidet, und welche visuelle anzeigt, dass sich der Schalthebel (110) in der vorbestimmten Position befindet,
wobei der Schalthebel (110) einen sich nach außen erstreckenden Abschnitt (120) hat, der als Hebelarm (125) konfiguriert ist, der dazu bestimmt ist, lösbar durch das Sperrelement (210) in der vorbestimmten Gangschaltposition gehalten zu werden, **dadurch gekennzeichnet, dass** das Sperrelement einen Gleitblocker (210) mit einer dem Hebelarm (125) zugewandten Vorderfläche (215) und eine Aussparung (216) umfasst, die darin definiert ist, um den Hebelarm (125) aufzunehmen und zu halten und konfiguriert ist, um eine Bewegung des Hebelarms (125) darin zu ermöglichen, um eine Änderung von anderen Übersetzungsverhältnissen zu ermöglichen, wobei die Aussparung (216) eine Schalthebelteileingangsrampe (217) hat, deren Form die Einführung des Schaltarms (125) darein ermöglicht und eine Schalthebelteilausgangsrampe (218) hat, deren Form die Halterung des Schalthebels (125) darin ermöglicht.

2. - Eine Shift-by-Wire-Schaltvorrichtung (100) nach Anspruch 1, wobei das bewegliche Sperrelement (210) auch zumindest positioniert werden kann in:
- eine dritte Position, in der der Schalthebel (110) vom Sperrmechanismus (200) gelöst werden kann, wodurch sich der Schalthebel (110) in die Ausgangsposition (H) bewegen kann.

3. - Eine Shift-by-Wire-Schaltvorrichtung (100) nach Anspruch 1 oder 2, wobei das bewegliche Sperrelement (210) auch zumindest positioniert werden kann in:
- eine vierte Position, in der eine Bewegung des Schalthebels (110) in die vorbestimmte Gangschaltposition verhindert wird.

4. - Eine Shift-by-Wire-Schaltvorrichtung (100) nach einem der Ansprüche 1 bis 3, wobei in der zweiten Position andere Übersetzungsverhältnisse als die Ausgangsposition (H) geändert werden können.

5. - Shift-by-wire-Schaltvorrichtung (100) nach einem der Ansprüche 1 bis 4, wobei das bewegliche Sperrelement (210) gegen die durch ein Vorspannelement (220) ausgeübte Beanspruchung translatorisch verschoben werden kann.

6. Shift-by-wire-Schaltvorrichtung (100) wie in Anspruch 5 beansprucht, wobei das Vorspannelement eine vorkomprimierte Feder (220) umfasst, die so angeordnet ist, dass sie bewirkt, dass sich das Sperrelement (210) in der zweiten Position befindet.

7. Shift-by-wire-Schaltvorrichtung (100) wie in einem der Ansprüche 2 bis 6 beansprucht, wobei sie weiterhin eine Motoreinrichtung (230) umfasst, um zu bewirken, dass sich das Sperrelement (210) zumindest in die dritte Position oder in die vierte Position bewegt.

8. Shift-by-Wire-Schaltvorrichtung (100) wie in Anspruch 7 beansprucht, wobei sie weiterhin ein Zahnradgetriebe (240) umfasst, das angeordnet ist, um das Sperrelement (210) durch die Motoreinrichtung (230) in mindestens die dritte Position oder in die vierte Position zu treiben, wobei das Zahnradgetriebe (240) einen Drücker (290) umfasst, der in der Lage ist, eine Drehbewegung der Motoreinrichtung (230) in eine translatorische Bewegung des Verriegelungselements (210) gegen das Vorspannelement (220) in mindestens die dritte Position oder die vierte Position umzuwandeln.

9. - Shift-by-Wire-Schaltvorrichtung (100) wie in einem der Ansprüche 6 bis 8 beansprucht, wobei der Gleitblockierer (210) eine obere Fläche (219a) hat, die dazu bestimmt ist, durch den Drücker (290) gedrückt zu werden, und eine untere Fläche (210b) hat, die dazu bestimmt ist, durch das Vorspannelement (220) beansprucht zu werden.

10. - Shift-by-Wire-Schaltvorrichtung (100) wie einem der Ansprüche 1 bis 9 beansprucht, wobei mindestens eine konturierte Oberfläche (300) vorgesehen ist, auf der ein federvorgespannter Kolben (115) des Schalthebels (110) gleitet, wenn der Schalthebel (110) betätigt wird, um dem Benutzer bei der Verwendung ein Schaltgefühl zu vermitteln.

11. Shift-by-Wire-Schaltvorrichtung (100) wie in Anspruch 10 beansprucht, wobei die konturierte Oberfläche (300) so konfiguriert ist, dass sie bewirkt, dass der Schalthebel (110) automatisch in die Ausgangsposition (H) zurückkehrt, nachdem eine gegebene Gangschaltposition ausgewählt worden ist.

12. Shift-by-wire-Schaltvorrichtung (100) wie in einem der Ansprüche 1 bis 11 beansprucht, wobei die vorbestimmte Gangschaltposition einem manuellen Gangschaltmodus (M) entspricht.

## Revendications

1. - Dispositif de changement de vitesse par fil (100) pour entraîner une transmission de véhicule à moteur, le dispositif de changement de vitesse (100) comprenant un levier de changement de vitesse (110) actionnable pour passer d'une position de repos (H) à une pluralité de différentes positions de changement de vitesse instables (R, N, D, M, M+, M-), dans au moins un mode de changement de vitesse automatique (A), pour changer automatiquement des rapports de transmission, de sorte qu'une fois qu'une position de changement de vitesse donnée a été sélectionnée, le levier de changement de vitesse (110) a tendance à revenir automatiquement en arrière à la position de repos (H), dans lequel le dispositif de changement de vitesse (100) comprend en outre un mécanisme d'arrêt de levier de changement de vitesse (200) comprenant un élément d'arrêt mobile (210) qui peut être positionné au moins dans :
- une première position dans laquelle le levier de changement de vitesse (110) peut être déplacé dans une position de changement de vitesse prédéterminée ; et
- une seconde position dans laquelle le levier de changement de vitesse (110) est retenu de manière libérable dans la position de changement de vitesse prédéterminée, ladite position de changement de vitesse prédéterminée étant différente de la position de repos (H), fournissant une indication visuelle que le levier de changement de vitesse (110) est dans la position prédéterminée,
dans lequel le levier de changement de vitesse (100) a une partie s'étendant vers l'extérieur (120) configurée comme un bras de levier (125) destinée à être retenue de manière libérable par l'élément d'arrêt (210) dans la position de changement de vitesse prédéterminée, **caractérisé en ce que** l'élément d'arrêt comprend un bloqueur coulissant (210) ayant une surface avant (215) faisant face au bras de levier (125) et un évidement (216) défini dans celui-ci pour recevoir et retenir le bras de levier (125) et configuré pour permettre que le bras de levier (125) soit déplacé à son intérieur de manière à permettre de changer d'autres rapports de transmission, l'évidement (216) ayant une rampe d'entrée de partie de levier de changement de vitesse (217) qui a une forme telle qui rend possible l'entrée du bras de levier (125) dans son intérieur, et une rampe de sortie de partie de levier de changement de vitesse (218) avec une forme permettant de retenir le bras de levier (125) dans son intérieur.

2. - Un dispositif de changement de vitesse par fil (100) selon la revendication 1, dans lequel l'élément d'arrêt mobile (210) peut également être positionné au moins dans :
- une troisième position dans laquelle le levier de changement de vitesse (110) peut être libéré du mécanisme d'arrêt (200) permettant que le levier de changement de vitesse (110) se déplace dans la position de repos (H).

3. - Un dispositif de changement de vitesse par fil (100) selon la revendication 1 ou 2, dans lequel l'élément d'arrêt mobile (210) peut également être positionné au moins dans :
- une quatrième position dans laquelle le levier de changement de vitesse (110) ne peut pas être déplacé dans la position de changement de vitesse prédéterminée.

4. - Un dispositif de changement de vitesse par fil (100) selon l'une quelconque des revendications 1 à 3, dans lequel dans ladite seconde position d'autres rapports de transmission que la position de repos (H) peuvent être modifiés.

5. - Dispositif de changement de vitesse par fil (100) selon l'une quelconque des revendications 1 à 4, dans lequel l'élément d'arrêt mobile (210) est déplaçable en translation contre la sollicitation d'un élément de rappel (220).

6. Dispositif de changement de vitesse par fil (100) tel que revendiqué dans la revendication 5, dans lequel l'élément de rappel comprend un ressort pré-comprimé (220) agencé pour amener l'élément d'arrêt (210) à être dans la seconde position.

7. Dispositif de changement de vitesse par fil (100) tel que revendiqué dans l'une quelconque des revendications 2 à 6, dans lequel il comprend en outre un moyen moteur (230) pour amener l'élément d'arrêt (210) à se déplacer au moins dans la troisième position ou dans la quatrième position.

8. Dispositif de changement de vitesse par fil (100) tel que revendiqué dans la revendication 7, dans lequel il comprend en outre une transmission à engrenages (240) agencée pour entraîner l'élément d'arrêt (210) à travers le moyen moteur (230) dans au moins la troisième position ou dans la quatrième position, la transmission à engrenages (240) comprenant un poussoir (290) apte à transformer un mouvement de rotation du moyen moteur (230) en un mouvement de translation de l'élément d'arrêt (210) contre l'élément de rappel (220) jusqu'au moins la troisième position ou la quatrième position.

9. - Dispositif de changement de vitesse par fil (100) tel que revendiqué dans l'une quelconque des revendications 6 à 8, dans lequel le bloqueur coulissant (210) a une surface supérieure (219a) destinée à être poussée par le poussoir (290) et une surface inférieure (210b) destinée à être sollicitée par l'élément de rappel (220).

10. - Dispositif de changement de vitesse par fil (100) tel que revendiqué dans l'une quelconque des revendications 1 à 9, dans lequel au moins une surface profilée (300) est prévue sur laquelle un piston rappelé par ressort (115) du levier de changement de vitesse (110) glisse lorsque le levier de changement de vitesse (110) est actionné de manière à donner à l'utilisateur une sensation de changement de vitesse en cours d'utilisation.

11. Dispositif de changement de vitesse par fil (100) tel que revendiqué dans la revendication 10, dans lequel ladite surface profilée (300) est configurée de manière à amener le levier de changement de vitesse (110) à revenir automatiquement à la position de repos (H) une fois qu'une position de changement de vitesse donnée a été sélectionné.

12. Dispositif de changement de vitesse par fil (100) tel que revendiqué dans l'une quelconque des revendications 1 à 11, dans lequel la position de changement de vitesse prédéterminée correspond à un mode de changement de vitesse manuel (M).
